# EUROPEAN PATENT SPECIFICATION

(11) **EP 2 173 121 B1**
(45) Date of publication and mention of the grant of the patent: **12.12.2012**
(21) Application number: 09171863.5
(22) Date of filing: 30.09.2009
(51) Int. Cl.: H04W 8/22, H04L 29/08

(54) **Method for remotely controlling user data and system adapted for the method**
Verfahren zur Fernsteuerung von Benutzerdaten und auf dieses Verfahren angepasstes System
Procédé de contrôle à distance de données d'utilisateur et système adapté au procédé

(30) Priority: 01.10.2008 KR 20080096496
(43) Date of publication of application: 07.04.2010
(73) Proprietor: Samsung Electronics Co., Ltd., Suwon-si, Gyeonggi-do, 443-742 (KR)
(72) Inventor: Jung, In Hyung, Gyeonggi-do (KR); Kim, Sung Yong, Gyeonggi-do (KR); Kim, Tae Kyoung, Gyeonggi-do (KR); Lee, Sang Ha, Gyeonggi-do (KR); Son, Young Woo, Gyeonggi-do (KR)
(74) Representative: Harrison Goddard Foote

(56) References cited:
- WO-A-2004/080041
- WO-A-2007/069263
- US-A1- 2005 259 618
- US-A1- 2006 025 177
- US-A1- 2007 281 664

## Description

### BACKGROUND OF THE INVENTION

### 1. Field of the Invention:

The present invention relates to remote control. More particularly, the present invention relates to a method for remotely controlling user data stored in a portable terminal and a system adapted for the method.

### 2. Description of the Related Art:

With the rapid development of information and technology, portable terminals have been also developed in terms of their technology and functions. Portable terminals can now provide a variety of functions, such as, a mobile communication function, a personal information management function, etc. Examples of the mobile communication function are a voice call and packet communication of text data or multimedia data. Examples of the personal information management function are a phone book management function and a daily schedule function. Users prefer portable terminals that employ recent technology and can provide a customized service. For example, users can store their personal information in the portable terminal. Therefore, portable terminals now become necessities in daily life.

As described above, conventional portable terminals have many advantages, such as portability and convenience, with the rapid development of their variety of functions. However, such advantages of the portable terminals may actually inconvenience the user. That is, if a user lost his/her portable terminal in which user data is stored, he/she may feel inconvenienced. In particular, if the person who picks up the portable terminal uses the portable terminal maliciously, such as disclosing the portable terminal owner's personal information or using charged services, the portable terminal loser may experience serious problems as a result. On the other hand, if a user cannot temporarily use his/her portable terminal, for example due to leaving the portable terminal at home, the user cannot use information stored in the portable terminal and thus may feel inconvenienced. Therefore, it is necessary to resolve the problems caused in cases where the user loses his/her portable terminal or leaves a place without carrying his/her portable terminal.

US2005/0259618 discloses a method of remotely controlling a wireless mobile device by establishing a communication channel between the wireless mobile device and a remotely located controlling device for conveying packetized data across the communication channel.

### SUMMARY OF THE INVENTION

An aspect of the present invention is to address at least the above-mentioned problems and/or disadvantages and to provide at least the advantages described below. Accordingly, an aspect of the present invention is to provide a method for remotely controlling user data stored in the portable terminal and a system adapted for the method.

In accordance with an aspect of the present invention, a method for remotely controlling user data is provided. The method includes setting a remote control function in a slave terminal, requesting, by a master terminal, the user data, stored in the slave terminal, from the slave terminal, authenticating, by the slave terminal, the master terminal, compressing, by the slave terminal, the user data requested by the master terminal, according to the size of the user data, and transmitting the compressed user data to the master terminal if the master terminal has been authenticated.

In accordance with another aspect of the present invention, a system for remotely controlling user data is provided. The system includes a slave terminal, set in a remote control function, for storing user data, and a master terminal for requesting the user data from the slave terminal and receiving it. The slave terminal authenticates the master terminal when the master terminal requests the user data therefrom, compresses the requested user data, according to the size of the user data, during the authentication, and transmits the compressed user data to the master terminal.

These and other objects and advantages are provided by a method and system according to the appended claims 1 and 7. Preferred embodiments are defined in the dependent claims.

Other aspects, advantages, and salient features of the invention will become apparent to those skilled in the art from the following detailed description, which taken in conjunction with the annexed drawings, discloses exemplary embodiment of the invention.

### BRIEF DESCRIPTION OF THE DRAWINGS

The above and other aspects, features, and advantages of certain exemplary embodiments of the present invention will become more apparent from the following description taken in conjunction with the accompanying drawings, in which:

FIG. 1 is a view illustrating a system for remotely controlling a portable terminal according to an exemplary embodiment of the present invention;

FIG. 2 is a schematic block diagram illustrating a portable terminal for remotely controlling user data, according to an exemplary embodiment of the present invention;

FIG. 3 is a signal flowchart describing a method for remotely controlling user data if a user does not carry his/her portable terminal, according to an exemplary embodiment of the present invention;

FIG. 4 is a signal flowchart describing a method for remotely controlling user data if a user lost his/her portable terminal, according to an exemplary embodiment of the present invention;

FIG. 5 is a flowchart describing a method for transmitting user data, according to an exemplary embodiment of the present invention;

FIGs. 6A, 6B and 6C are views illustrating a method for converting user data in a transmission format, according to an exemplary embodiment of the present invention; and

FIG. 7 illustrates display screens during a method for setting a remote control function, according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present invention relates to technology for controlling a portable terminal that a user has lost or does not carry by remotely acquiring or deleting user data from or in the portable terminal. In the following description, the technology for remotely controlling a portable terminal, according to the present invention, is described based on a mobile tracker function. The mobile tracker function refers to a function that transmits a message from a lost portable terminal to another electronic device, previously set, notifying that a Subscriber Identity Module (SIM) of the lost portable terminal is changed. In the following description, although the method for remotely controlling user data, according to an exemplary embodiment of the present invention, is described on the basis of the mobile tracker function, it should be understood that the present invention is not so limited. An exemplary method for remotely controlling user data, stored in a portable terminal, using a mobile tracker function will be described in more detail with reference to the accompanying drawings.

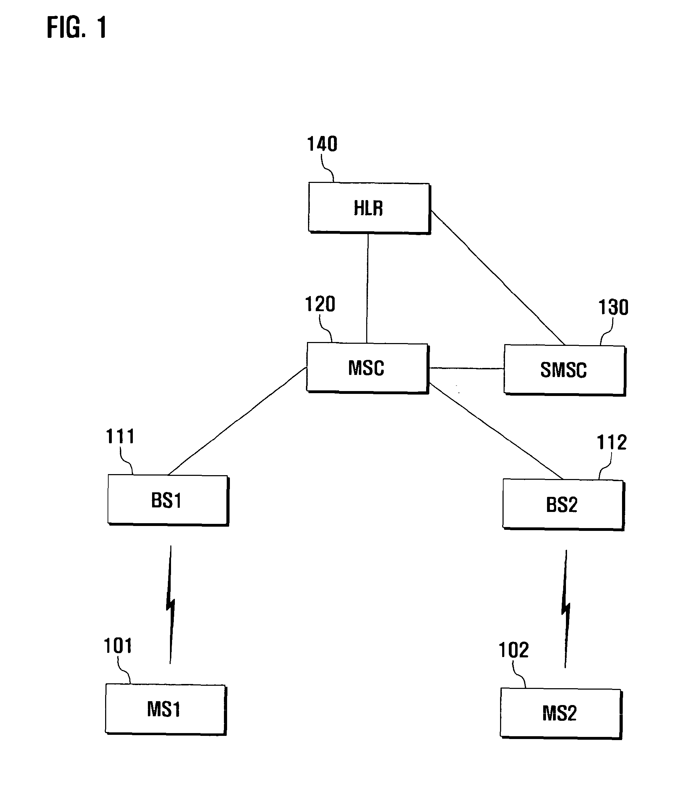

FIG. 1 is a view illustrating a system for remotely controlling a portable terminal according to an exemplary embodiment of the present invention. As shown in FIG. 1, the remote control method using a mobile tracker function allows a Short Message Service (SMS) message to be transmitted via a mobile communication network. The remote control method can perform a remote controlling operation using functions other than the mobile tracker function. The remote control method can process and transmit formats of messages other than the SMS messages, such as Multimedia Messaging Service (MMS) messages, emails, etc. Other formats of messages may be transmitted via networks other than the mobile communication network. If messages are transmitted via a network other than the mobile communication network, the structure of the system of FIG. 1 may be altered according to the network.

Referring to FIG. 1, a Mobile Station 1 (hereinafter called a 'MS1') 101 is a portable terminal that may be controlled by a remote control function. That is, the MS1 101 is a slave terminal. A Mobile Station 2 (hereinafter called a 'MS2') 102 is a terminal that can remotely control the MS1 101. That is, the MS2 102 is a master terminal. Base Station 1 (BS1) 111 and Base Station 2 (BS2) 112 manage the MS1 101 and MS2 102, respectively. If the MS1 101 and MS2 102 are located within one cell, i.e., the same cell, it means that the BS1 101 and BS2 102 are the same base station. That is, one cell is covered by only one base station. The BS1 111 and BS2 112 are connected to and communicate with the MS1 101 and MS2 102 via a wireless link, respectively. A Mobile Switching Center (MSC) 120 processes signals communicated between the BS1 111 and BS2 112, and controls the BS1 and BS2. The MSC 120 can also inquire about the location of the MS1 101 or MS2 102 from a Home Location Register (HLR) 140.

A Short Message Service Center (SMSC) 130 is connected to the HLR 140 and the MSC 120. The SMSC 130 detects the location of the MS1 101 or MS2 102, and transmits the location to a mobile station via an SMS message. If the SMSC 130 is requested to transmit an SMS message to a called mobile station that cannot perform a receiving operation at an arbitrary period of time, it may store the SMS message for a certain period of time and then forward it to the called mobile station later. For example, if an SMS message for a remote control function is transmitted from the MS1 101 or MS2 102 to the BS1 111 or BS2 112, the BS1 111 or BS2 112 receives the SMS message and then transmits it to the MSC 120. The MSC 120 transmits the received SMS message to the SMSC 130. The SMSC 130 determines whether the called terminal that transmitted the SMS message, i.e., the MS1 101 or MS2 102, is in a receivable state. If the called terminal is in a receivable state, the SMSC 130 transmits the received SMS message to the called terminal. On the contrary, if the called terminal is in a non-receivable state, the SMSC 130 stores the received SMS message and does not transmit it to the called terminal until the called terminal changes its state into a receivable state. The HLR 140 stores subscriber information, such as locations of mobile station users, etc. In an exemplary embodiment of the present invention, the MS1 101 or MS2 102 is explained based on a mobile communication terminal. However, it should be understood that the present invention is not so limited. For example, the MS1 101 or MS2 102 may be implemented with a Personal Data Assistant (PDA), a smart phone, etc.

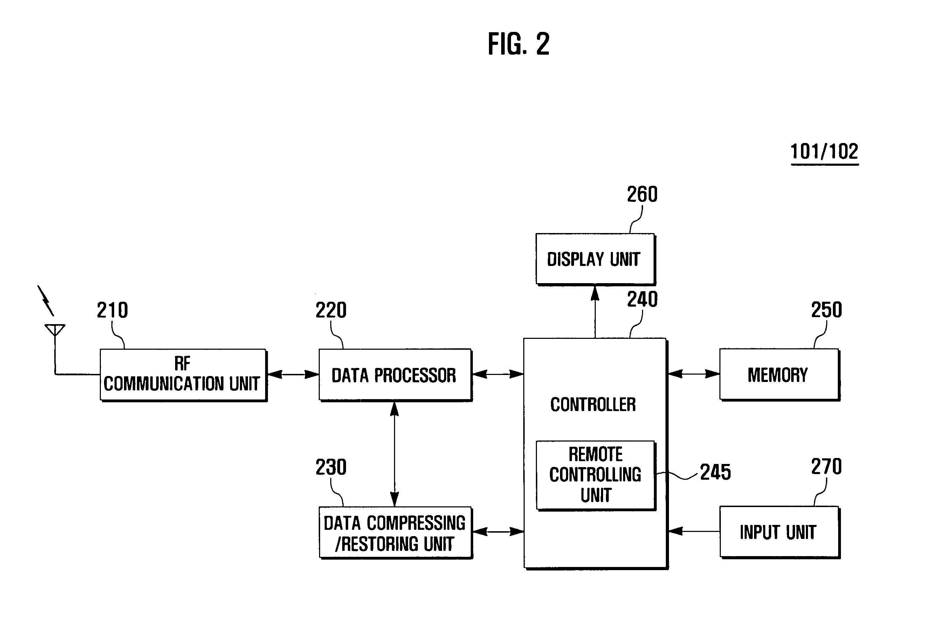

FIG. 2 is a schematic block diagram illustrating a portable terminal for remotely controlling user data, according to an exemplary embodiment of the present invention. As shown in FIG. 2, the portable terminal may be a mobile station, such as the MS1 101 or MS2 102, as shown in FIG. 1.

Referring to FIG. 2, an RF communication unit 210 allows for RF communication between a portable terminal 101 or 102 and the BS1 111 or BS2 112 shown in FIG. 1. The RF communication unit 210 is configured to include an RF transmitter for up-converting the frequency of transmitted signals and amplifying the transmitted signals and an RF receiver for low-noise amplifying received RF signals and down-converting the frequency of the received RF signals.

A data processor 220 processes input data, etc. The data processor 220 includes a transmitter for coding and modulating signals that will be transmitted via the RF communication unit 210 and a receiver for demodulating and decoding signals received by the RF communication unit 210. For example, the data processor 220 may include a MOdulator/DEModulator (MODEM) and a COder/DECoder (CODEC).

A data compressing/restoring unit 230 implements a compression algorithm. Using its compression algorithm, the data compressing/restoring unit 230 compresses data that will be transmitted under the remote control of a remote controlling unit 245 of a controller 240. The data compressing/restoring unit 230 can also decompress the received compressed data and then restore the original data. In particular, the data compressing/restoring unit 230 can exert its capability if the data size is large. If the portable terminal shown in FIG. 2 is implemented with the MS1 101, the data compressing/restoring unit 230 serves as a data compressing unit and compresses data. If the portable terminal shown in FIG. 2 is implemented with the MS2 102, the data compressing/restoring unit 230 serves a data decompressing unit and restores data.

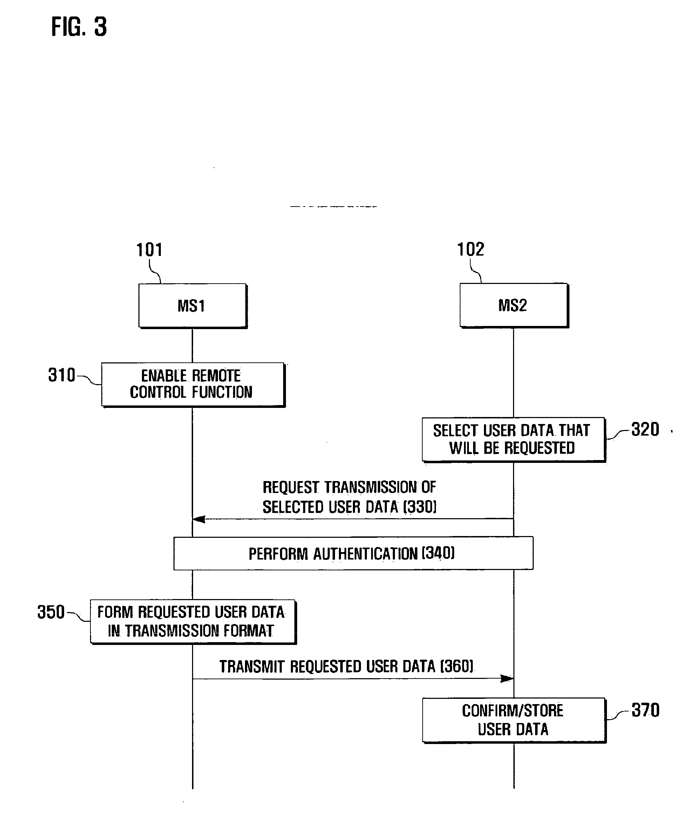

A controller 240 controls operations of the portable terminal 101 or 102 and signal flows between blocks in the portable terminal 101 or 102. The controller 240 may include the data processor 220. The controller 240 may include the remote controlling unit 245 for performing a remote control function. The remote control function will be described in more detail later with reference to FIGs. 3 to 7.

A memory 250 stores application programs necessary for operations of the portable terminal 101 or 102 and a variety of data. For example, the memory 250 may store a phone book, schedule information, a memo, and other data input by a user. The memory 250 may also store user data, such as SMS messages, MMS messages, etc., where the SMS messages and MMS messages are received via the RF communication unit 210, and hereinafter called a message. The memory 250 may further store information regarding a called terminal and a remote controlling password, which are input to set a remote control function.

A display unit 260 displays data, generated while the program is executed, on a screen. The display unit 260 also displays a user's key input states. The display unit 260 may be implemented with an LCD. In particular, if the display unit 260 is implemented with a touch screen, it may also serve as an input device.

An input unit 270 allows a user to input numerical and character information and outputs input signals, related to the setting of a variety of functions and to the control of the portable terminal 101 or 102, to the controller 240. The input unit 270 may be implemented with a touch pad, a keypad, or a combination thereof, according to the type of portable terminal 101 or 102. Although not illustrated in FIG. 2, the portable terminal 101 or 102 may further include an SIM card containing a user's identification information. In that case, the controller 240 determines whether the SIM card has been changed and thus detects whether a loss event occurs.

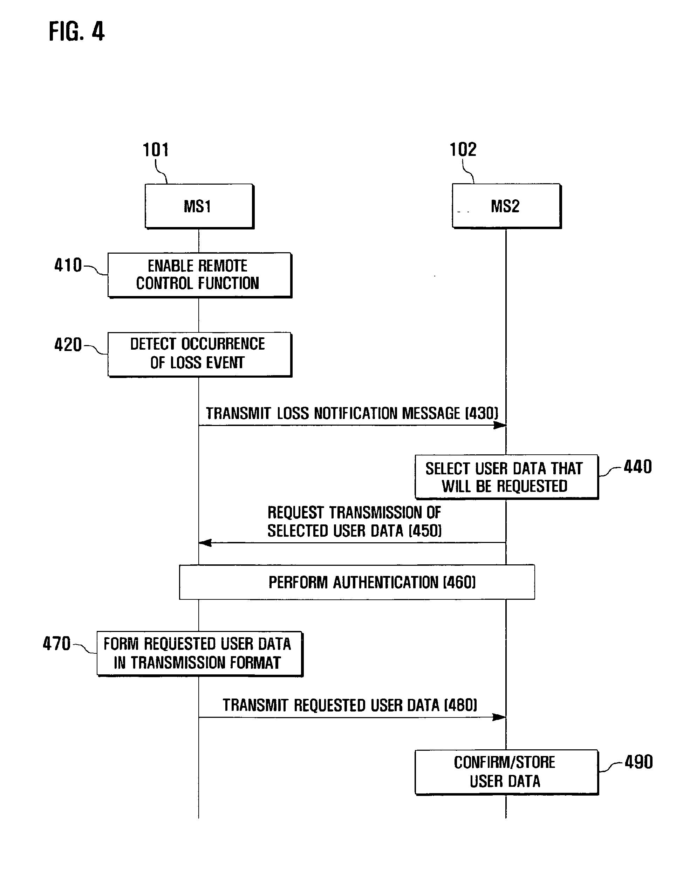

In the following description, a method for remotely controlling user data is described, with respect to respective cases where the user does not carry the portable terminal, with reference to FIG. 3, and where the user has lost the portable terminal with reference to FIG. 4.

FIG. 3 is a signal flowchart describing a method for remotely controlling user data if a user does not carry his/her portable terminal, according to an exemplary embodiment of the present invention.

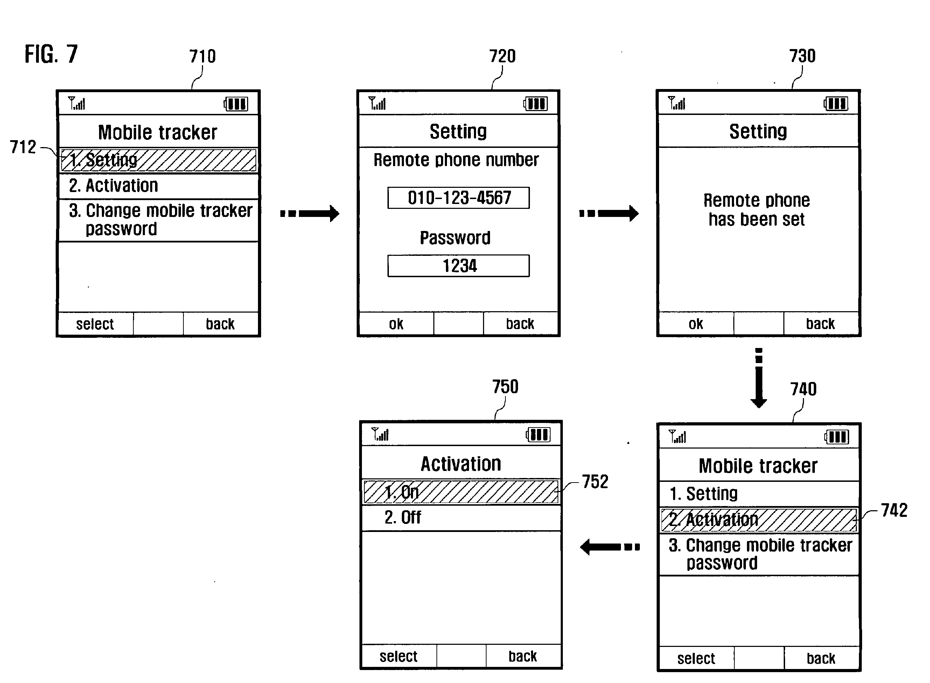

Referring to FIG. 3, it is assumed that the MS1 101 is a slave terminal that has enabled a remote control function and the MS2 102 is a master terminal that remotely controls user data of the MS1 101. That is, the MS1 101 refers to a portable terminal that is remotely controlled by a user and stores user data. The MS2 102 refers to a terminal that is operated by the user to control the MS1 101. In the following description, it is assumed that the MS2 is set as a message receiving terminal that receives a message from the slave terminal that is set with the remote control function. To this end, the MS1 101 can be set with a remote control function, together with setting information regarding the message receiving terminal, such as a phone number and a remote control password for authentication. The process of setting a remote control function will be described in more detail with reference to FIG. 7.

Referring to FIG. 3, the MS1 101 is in a state where a remote control function is activated in step 310. The MS2 102 selects user data to be transmitted from the MS1 101 in order to remotely control user data of the MS1 101 in step 320. The user data can be selected as a user performs an inputting operation via the input unit 270 shown in FIG. 2. The user data contains necessary information for the user of the MS1 101. For example, the user data contains a phone book, schedule information, memo, and messages. The MS2 102 requests a list of user data from the MS1 101 in order to select user data. After receiving a list of corresponding user data from the MS1 101, the MS2 102 may select user data from the received list. The MS2 102 requests transmission of the selected user data from the MS1 101 in step 330. Transmission of user data can be requested by using an SMS message.

The MS1 101 and MS2 102 perform an authentication process 340. During the authentication process, the MS1 101 requests an authentication number, such as a password, from the MS2 102, receives the authentication number, and determines whether the received authentication number is consistent with an authentication number associated with the MS2 102. In an exemplary embodiment, the authentication number may be previously stored. If it is determined that the received authentication number is consistent with the associated authentication number, the MS1 101 performs next processes to transmit user data, requested by the MS2 102, to the MS2 102. On the contrary, if it is determined that the received authentication number is not consistent with the associated authentication number, the MS1 101 transmits a message, indicating that the authentication numbers are inconsistent, to the MS2 102. The process of determining the authentication number from the MS1 101 to the MS2 102 is performed once. It should be understood that the number of times of determining the authentication number may be set at a predetermined frequency. The process of authenticating MS2 102 may be performed at step 330 by determining whether the authentication number contained in the transmitted message is consistent with an associated authentication number, instead of performing the authentication process of step 340. The exemplary embodiment of the present invention shown in FIG. 3 illustrates the case where the authentication numbers are consistent with each other. It should be understood that the MS1 101 may determine whether the received message corresponds to a message for remote control before it performs the authentication process of step 340. In an exemplary embodiment of the present invention, it is assumed that the MS1 101 and MS2 102 can distinguish between a message for remote control and a general SMS message according to a preset protocol.

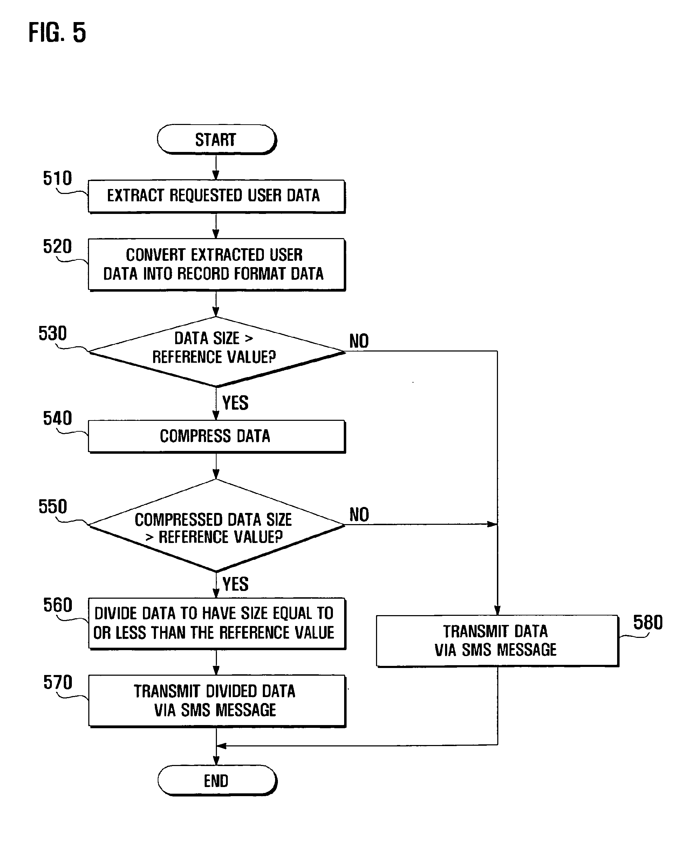

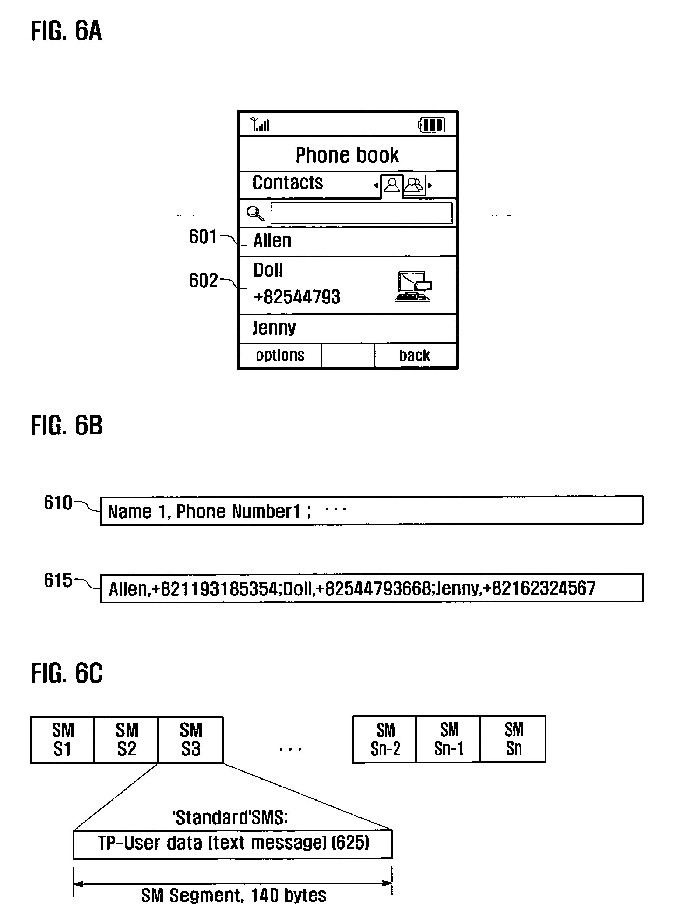

The MS1 101 processes user data, requested by the MS2 102, in a preset format, for example, an SMS message, an MMS, an email, etc. in order to transmit the requested user data to the MS2 102 in step 350. If the requested user data is equal to or greater than a certain size (hereinafter a reference value), the MS1 101 may compress the requested user data using a compression algorithm and then transmit it to the MS2 102. This process will be described in more detail with reference to FIG. 5 and FIGs. 6A to 6C. The MS1 101 transmits the requested user data, processed in a transmission format, to the MS2 102 in step 360. The MS2 102 identifies the received user data and then stores it or terminates the process in step 370.

As described above, although a user does not carry his/her portable terminal, he/she can remotely control the portable terminal and acquire user data therefrom. Therefore, the system according to an exemplary embodiment of the present invention can provide user convenience to portable terminal users.

FIG. 4 is a signal flowchart describing a method for remotely controlling user data if a user lost his/her portable terminal, according to an exemplary embodiment of the present invention.

Referring to FIG. 4, it is assumed that the MS1 101 is a slave terminal that has enabled a remote control function and the MS2 102 is a master terminal that remotely controls user data of the MS1 101. That is, the MS1 101 refers to a portable terminal that is remotely controlled by a user and stores user data. The MS2 102 refers to a terminal that is operated by the user to control the MS1 101. In the following description, it is assumed that the MS2 is set as a message receiving terminal that receives a message from the slave terminal that is set with the remote control function. To this end, the MS1 101 can be set with a remote control function, together with setting information regarding the message receiving terminal, such as a phone number and a remote control password for authentication. The process of setting a remote control function will be described in more detail with reference to FIG. 7.

Referring to FIG. 4, the MS1 101 is in a state where a remote control function is activated in step 410. The MS1 101 continues determining whether a loss event of a portable terminal occurs, while a remote control function is active. If a portable terminal has a SIM card, determining as to whether a loss event of the portable terminal has occurred is achieved by detecting whether the SIM card has been changed. That is, it can be determined that a loss event of a portable terminal has occurred by detecting whether a preset operation is generated. If the MS 1 101 detects that a loss event has occurred in step 420, it transmits a message, notifying that a loss event has occurred, to the MS2 102 in step 430. The message has a preset format where the MS2 102 is preset as a called terminal.

When the MS2 102 receives the loss notifying message from the MS1 101, it selects user data to be transmitted from the MS1 101 in order to remotely control user data of the MS1 101 in step 440. The selected user data may contain information as to whether the selected user data is transmitted from the MS1 101 to the MS2 102 and then deleted from the MS1 101. If a selection is made to delete the user data, the MS1 101 transmits the user data to the MS2 102 and then deletes it from its memory 250. In addition, selecting user data can be achieved by a user's input via the input unit 270 shown in FIG. 2. The user data contains necessary data for the user of the MS1 101, for example, a phone book, schedule information, memo and messages. In order to select user data, the MS2 102 requests a list of user data from the MS1 101, receives the list therefrom, and then selects corresponding user data from the received list. The MS2 102 requests transmission of the selected user data from the MS1 101 in step 450. Transmission of user data can be requested by using an SMS message.

The MS1 101 and MS2 102 perform an authentication process in step 460. During the authentication process, the MS1 101 requests an authentication number, such as a password, from the MS2 102, receives the authentication number, and determines whether the received authentication number is consistent with an authentication number associated with the MS2 102. In an exemplary embodiment, the authentication number may be previously stored. If it is determined that the received authentication number is consistent with the associated authentication number, the MS1 101 performs additional processes to transmit user data, requested by the MS2 102, to the MS2 102. On the contrary, if it is determined that the received authentication number is not consistent with the associated authentication number, the MS1 101 transmits a message, indicating that the authentication numbers are inconsistent, to the MS2 102. The process of determining the authentication number from the MS1 101 to the MS2 102 is performed once. It should be understood that the number of times the authentication number is determined may be set at a predetermined frequency. The process of authenticating MS2 102 may be performed at step 450 by determining whether the authentication number contained in the transmitted message is consistent with an associated authentication number, instead of performing the authentication process of step 460. The exemplary embodiment of the present invention shown in FIG. 4 illustrates the case where the authentication numbers are consistent with each other. It should be understood that the MS1 101 may determine whether the received message corresponds to a message for remote control before it performs the authentication process of step 460. In an exemplary embodiment of the present invention, it is assumed that the MS1 101 and MS2 102 can distinguish between a message for remote control and a general SMS message according to a preset protocol.

The MS1 101 processes user data, requested by the MS2 102, in a preset format, for example, an SMS message, an MMS, an email, etc. in order to transmit the requested user data to the MS2 102 in step 470. If the requested user data is equal to or greater than a certain size (hereinafter a reference value), the MS1 101 may compress the requested user data using a compression algorithm and then transmit it to the MS2 102. This process will be described in more detail with reference to FIG. 5 and FIGs. 6A to 6C. The MS1 101 transmits the requested user data, processed in a transmission format, to the MS2 102 in step 480. If a request is made to delete user data from the MS1 101 after the user data is transmitted to the MS2 102, the MS1 101 transmits the user data to the MS2 102 and then deletes it from its memory 250 at step 480. The MS2 102 identifies the received user data and then stores it or terminates the process in step 490.

As described above, although a user loses his/her portable terminal, he/she can remotely control the lost portable terminal. That is, the user can receive user data from the lost portable terminal and even delete user data therefrom, thereby preventing his/her information from being disclosed from the lost portable terminal. Furthermore, if the requested user data is large, it can be compressed and then transmitted from the lost portable terminal to a terminal that a user is accessing. That is, the system according to an exemplary embodiment of the present invention can allow for user data transmission, irrespective of the amount of user data, because of the use of a data compressing method. This can allow a user not to suffer from inconvenience where the user requests user data repeatedly and then receives the data from the lost portable terminal.

FIG. 5 is a flowchart describing a method for transmitting user data, according to an exemplary embodiment of the present invention, where the MS1 101, set as a slave terminal, receives a request to transmit user data from the MS2 102 and then transmits the requested user data in an SMS message format to the MS2 102.

FIGs. 6A, 6B and 6C are views illustrating a method for converting user data in a transmission format, according to an exemplary embodiment of the present invention. In an exemplary embodiment of the present invention, the requested user data is a phone book.

Referring to FIG. 5 and FIGs. 6A to 6C, the controller 240, or the remote controlling unit 245, extracts requested user data from the memory 250 in step 510. The user data may be a phone number as shown in FIG. 6A. The remote controlling unit 245 converts the extracted user data, i.e., a phone book, into record format data 610, shown in FIG. 6B in step 520. The record format data 610 is record format raw data composed of text. That is, the record format data 610 may be data stored in the phone book. For example, the record format data 610 may be composed of name 1, phone number 1; name 2, phone number 2; ... and so on. As shown in FIG. 6A, record format data 610, 'Allen' as the first stored name 601, '+82 1193185354' of Allen's phone number; and 'Doll' as a name 602 next to 'Allen', '+82544793668' of Doll's phone number, is extracted from the phone book, and then converted into text format data 615.

The remote controlling unit 245 determines whether the size of the converted data is greater than a reference value in step 530. The reference value refers to the maximum amount of data that can be transmitted in a preset transmission format, once. In an exemplary embodiment of the present invention, since the converted data is transmitted in an SMS format, it is assumed that the reference value is 140 bytes allowable in a short message. If it is determined that the size of the converted data is greater than the reference value (i.e., 140 bytes) at step 530, the remote controlling unit 245 compresses the converted data using a compression algorithm implemented in the data compressing/restoring unit 230 in step 540. In an exemplary embodiment of the present invention, the compression algorithm is implemented with a ZIP algorithm, which is a well-known algorithm. A data compressing/restoring unit 230 of the master terminal receives the compressed data and restores it using a decompression algorithm that is substantially the same as the compressing algorithm used by the slave terminal, thereby acquiring the original user data.

The remote controlling unit 245 determines whether the compressed data is greater than a reference value in step 550. The reference value refers to the maximum size of data that can be transmitted in a preset transmission format, once. In an exemplary embodiment of the present invention, since compressed data is transmitted through an SMS, it is assumed that the reference value is 140 bytes allowable in a short message. If it is determined that the size of the compressed data is greater than the reference value (i.e., 140 bytes) at step 550, the remote controlling unit 245 divides the compressed data into data of equal to or less than 140 bytes in step 560. The divided data is shown in FIG. 6C. The divided data is composed of n Short Message (SM) segments, where n is a natural number. One SM segment is composed of a user data field of 140 bytes according to the international standard for SMS message. In FIG. 6C, the user data field is labeled as 625. Each of the divided SM segments is transmitted through one SMS message. The remote controlling unit 245 transmits the data, divided into n SM segments, to a preset called terminal via the RF communication unit 210 in step 570. On the contrary, if it is determined that the size of the converted data is equal to or less than the reference value (i.e., 140 bytes) at step 530, or if it is determined that the size of the compressed data is equal to or less than the reference value (i.e., 140 bytes) at step 550, the remote controlling unit 245 transmits the converted data or compressed data in an SMS message format to a preset called terminal via the RF communication unit 210 in step 580. Referring to FIG. 5, although the exemplary embodiment of the present invention is implemented in such a way that the user data is a phone book and all information is extracted from the phone book and then transmitted, it should be understood that the present invention is not so limited. For example, the invention may be modified in such a way that part of information or particular information is selected and extracted from the phone book and then processed.

As described above, although the amount of user data requested to be transmitted is large, an exemplary system of the present invention can compress and then transmit the data, thereby achieving efficient transmission of user data. This can allow a user to avoid an inconvenience caused when a user must repeatedly request the desired user data. This can also resolve transmission failure due to the large size of requested user data.

FIG. 7 illustrated display screens during a method for setting a remote control function, according to an exemplary embodiment of the present invention.

Referring to FIG. 7, if a remote control function, for example, a mobile tracker function, is selected so that the MS1 101 serving as a slave terminal can be set by the function, the display unit 260 displays the screen 710. When an item 712, 'Setting', is selected on the screen 710, the display unit 260 switches the screen 710 to a screen 720 for inputting information regarding a master terminal and a remote control password. When master terminal information, i.e., a remote phone number (phone number of the master terminal), and a remote control password for authenticating the master terminal are input to the screen 720 via the input unit 270, the display unit 260 displays a message indicating that the master terminal has been set for a mobile tracker function, i.e., 'Remote phone has been set', on the screen 730, where "remote phone" refers to the master terminal. In an exemplary embodiment of the present invention, the following process may be further included. That is, in order to complete the settings, the MS1 101 transmits a message, indicating that the MS2 102 has been set as a remote portable terminal, to the master terminal, MS2 102, and then receives a response message from the master terminal, MS2 102.

After the MS2 102 has been set as a remote portable terminal shown in screen 730, the display unit 260 switches the screen 730 to a screen 740. When an item 742 'Activation' is selected on the screen 740 via the input unit 270, the display unit 260 switches to a screen 750. When an item 752 'On' for activating a remote control function is selected on the screen 750 via the input unit 270, the remote control function has been set. In an exemplary embodiment of the present invention, the MS1 101 sets the remote control function through the screens shown in FIG. 7. Meanwhile, the states where a remote control function is activated, at step 310 of FIG. 3 and step 410 of FIG. 4, refer to the state that the MS1 101 has been set in a remote control function through the processes of FIG. 7 and then is showing the screen 750 where the remote control function is activated.

As described above, since a preset terminal can remotely control a portable terminal where user data is stored, the system according to an exemplary embodiment of the present invention can provide enhanced convenience to the users. If a large amount of user data is requested to be transmitted according to the remote control, the system can compress and then transmit the user data from the portable terminal to the terminal that the user can access, with only one user's request. Since the system according to exemplary embodiments of the present invention can remotely access a portable terminal through authentication and control user data, such as personal information, stored therein, it can prevent the user data from being disclosed from the lost portable terminal.

While the invention has been shown and described with reference to certain exemplary embodiments thereof, it will be understood by those skilled in the art that various changes in form and details may be made therein without departing from the scope of the invention as described in the appended claims and their equivalents.

## Claims

1. A method for remotely controlling user data, the method comprising:
setting a remote control function in a slave terminal;
requesting (330, 450), by a master terminal, the user data, stored in the slave terminal set in a remote control function, from the slave terminal;
authenticating (340, 460), by the slave terminal, the master terminal;
extracting (510) the requested user data from a memory;
converting (520) the extracted user data into data of a record format;
comparing (530) the size of the converted data with a reference size;
compressing (540), if the size of the converted data is greater than the reference size, the converted data by a compression algorithm;
comparing (550) the size of the compressed data with the reference size;
dividing (560), if the size of the compressed data is greater than the reference size, the compressed data into the reference size; and
transmitting (360, 480) the compressed and divided user data to the master terminal if the master terminal has been authenticated.

2. The method of clam 1, wherein the converted data is transmitted in at least one of Short Message Service (SMS) message format, a Multimedia Messaging Service (MMS) message format, and an email format.

3. The method of any one of claims 1 to 2, wherein the user data comprises:
at least one of a phone book, schedule information, an SMS message, an MMS message, and a memo.

4. The method of any one of clams 1 to 3, wherein the setting of the remote control function in the slave terminal comprises;
storing information regarding the master terminal and a remote control password in the slave terminal; and
activating the remote control function.

5. The method of clam any one of claims 1 to 4, wherein the remote control function is a mobile tracker. '

6. The method of claim 1, further comprising:
detecting a loss event at the slave terminal (420); and
transmitting a loss notification message to the master terminal (430),
wherein the detecting of the loss event (420) comprises determining if a Subscriber Identity Module (SIM) card has been changed.

7. A system for remotely controlling user data, the system comprising:
a slave terminal (101), set in a remote control function, for storing user data; and
a master terminal (102) for requesting the user data from the slave terminal and receiving it,
wherein the slave terminal (101) is configured to authenticate the master terminal (102) when the master terminal (102) requests the user data therefrom to extract the requested user data from a memory to convert the extracted user data into data of a record format to compare the size of the converted data with a reference size, to compresse if the size of the converted data is greater than the reference size, the requested user data by a compression algorithm, to compare the size of the compressed data with the reference size, to divide, if the size of the compressed data is greater than the reference size, the compressed data into the reference size during the authentication, and to transmit the compressed and divided user data to the master terminal (102).

8. The system of claim 7, wherein the slave terminal (101) comprises:
a memory (250) for storing the user data, information regarding the master terminal, and a remote control password;
a remote controlling unit (245) for extracting the requested user data when the authenticated master terminal (102) requests a transmission of the user data from the slave terminal (101), wherein the master terminal (102) is authenticated by the stored remote control password;
a compressing unit (230) for compressing the user data by a compressing algorithm if the size of the user data is greater than a reference size; and
an RF communication unit (210) for transmitting the user data to the master terminal (102),
wherein the remote controlling unit (245) is configured to compare the size of the compressed data with the reference size, and divides the compressed data into the reference size if the size of the compressed data is greater than the reference size.

9. The system of claim 8, wherein the remote controlling unit (245) is configured to convert the extracted user data into data of a record format and generates data in at least one of a Short Message Service (SMS) message format, a Multimedia Messaging Service (MMS) message format, and an email format.

10. The system of any one of claims 7 to 9, wherein the user data comprises:
at least one of a phone book, schedule information, an SMS message, an MMS message, and a memo.

11. The system of any one of claims 7 to 10, wherein the remote control function is a mobile tracker that is installed in the slave terminal (101) and the master terminal (102).

12. The system of claim 8 to 11, wherein the remote controlling unit (245) is configured to transmit the user data to the master terminal (102) and then deletes the user data from the memory (250) if a request is made to transmit and delete the user data.

13. The system of claim 7 to 12, wherein the slave terminal(101) is configured to detect a loss event and transmits a loss notification message to the master terminal(102),
wherein the slave terminal(101) is configured to delect of the loss event by determining if a Subscriber Identity Module (SIM) card has been changed.

## Patentansprüche

1. Verfahren zur Fernsteuerung von Benutzerdaten, wobei das Verfahren folgendes umfasst:
das Einstellen einer Fernsteuerungsfunktion in einem Slave-Terminal;
durch einen Master-Terminal das Anfordern (330, 450) der Benutzerdaten, die in dem in einer Fernsteuerungsfunktion eingestellten Slave-Terminal gespeichert sind, von dem Slave-Terminal;
das Authentifizieren (340, 460) des Master-Terminals durch den Slave-Terminal;
das Extrahieren (510) der angeforderten Benutzerdaten aus einem Speicher;
das Umwandeln (520) der extrahierten Benutzerdaten in Daten eines Aufzeichnungsformats;
das Vergleichen (530) der Größe der umgewandelten Daten mit einer Bezugsgröße;
das Komprimieren (540) der umgewandelten Daten durch einen Komprimierungsalgorithmus, wenn die Größe der umgewandelten Daten größer ist als die Bezugsgröße;
das Vergleichen (550) der Größe der komprimierten Daten mit der Bezugsgröße;
das Teilen (560) der komprimierten Daten in die Bezugsgröße, wenn die Größe der komprimierten Daten größer ist als die Bezugsgröße; und
das Übermitteln (360, 480) der komprimierten und geteilten Benutzerdaten an den Master-Terminal, wenn der Master-Terminal authentifiziert worden ist.

2. Verfahren nach Anspruch 1, wobei die umgewandelten Daten in mindestens einem Nachrichtenformat Short Message Service (SMS), einem Nachrichtenformat Multimedia Messaging Service (MMS) oder einem E-Mail-Format übermittelt werden.

3. Verfahren nach einem der Ansprüche 1 bis 2, wobei die Benutzerdaten folgendes umfassen:
mindestens ein Telefonbuch bzw. Kontaktverzeichnis, Kalenderdaten, eine SMS-Nachricht, eine MMS-Nachricht oder eine Notiz.

4. Verfahren nach einem der Ansprüche 1 bis 3, wobei das Einstellen der Fernsteuerungsfunktion in dem Slave-Terminal folgendes umfasst:
das Speichern von Informationen in Bezug auf den Master-Terminal und ein Fernsteuerungspasswort in dem Slave-Terminal; und
das Aktivieren der Fernsteuerungsfunktion.

5. Verfahren nach einem der Ansprüche 1 bis 4, wobei es sich bei der Fernsteuerungsfunktion um eine mobile Ortungsfunktion handelt.

6. Verfahren nach Anspruch 1, wobei dieses ferner folgendes umfasst:
das Erkennen eines Verlustereignisses an dem Slave-Terminal (420); und
das Übermitteln einer Verlustbenachrichtigungsnachricht an den Master-Terminal (430);
wobei das Erkennen des Verlustereignisses (420) das Bestimmen umfasst, ob eine Subscriber Identity Module (SIM) Karte gewechselt worden ist.

7. System zur Fernsteuerung von Benutzerdaten, wobei das System folgendes umfasst:
einen in eine Fernsteuerungsfunktion eingestellten Slave-Terminal (101) zum Speichern von Benutzerdaten; und
einen Master-Terminal (102) zum Anfordern der Benutzerdaten von dem Slave-Terminal sowie zum Empfang von diesen;
wobei der Slave-Terminal (101) so konfiguriert ist, dass er den Master-Terminal (102) authentifiziert, wenn der Master-Terminal (102) die Benutzerdaten von diesem anfordert, um die angeforderten Benutzerdaten aus dem Speicher zu extrahieren, um die extrahierten Benutzerdaten in Daten eines Aufzeichnungsformats umzuwandeln, um die Größe der umgewandelten Daten mit einer Bezugsgröße zu vergleichen, um die angeforderten Benutzerdaten durch einen Komprimierungsalgorithmus zu komprimieren, wenn die Größe der umgewandelten Daten größer ist als die Bezugsgröße, um die Größe der komprimierten Daten mit der Bezugsgröße zu vergleichen, um die komprimierten Daten während der Authentifizierung in die Bezugsgröße zu teilen, wenn die Größe der komprimierten Daten größer ist als die Bezugsgröße, und um die komprimierten und geteilten Benutzerdaten an den Master-Terminal (102) zu übermitteln.

8. System nach Anspruch 7, wobei der Slave-Terminal (101) folgendes umfasst:
einen Speicher (250) zum Speichern der Benutzerdaten, von Informationen in Bezug auf den Master-Terminal und eines Fernsteuerungspassworts;
eine Fernsteuerungseinheit (245) zum Extrahieren der angeforderten Benutzerdaten, wenn der authentifizierte Master-Terminal (102) eine Übermittlung der Benutzerdaten von dem Slave-Terminal (101) anfordert, wobei der Master-Terminal (102) durch das gespeicherte Fernsteuerungspasswort authentifiziert wird;
eine Komprimierungseinheit (230) zum Komprimieren der Benutzerdaten durch einen Komprimierungsalgorithmus, wenn die Größe der Benutzerdaten größer ist als eine Bezugsgröße; und
eine RF-Kommunikationseinheit (210) zum Übermitteln der Benutzerdaten an den Master-Terminal (102);
wobei die Fernsteuerungseinheit (245) so konfiguriert ist, dass sie die Größe der komprimierten Daten mit der Bezugsgröße vergleicht und die komprimierten Daten in die Bezugsgröße teilt, wenn die Größe der komprimierten Daten größer ist als die Bezugsgröße.

9. System nach Anspruch 8, wobei die Fernsteuerungseinheit (245) so konfiguriert ist, dass sie die extrahierten Benutzerdaten in Daten eines Aufzeichnungsformats umwandelt und Daten in mindestens einem Nachrichtenformat Short Message Service (SMS), einem Nachrichtenformat Multimedia Messaging Service (MMS) oder einem E-Mail-Format erzeugt.

10. System nach einem der Ansprüche 7 bis 9, wobei die Benutzerdaten folgendes umfassen:
mindestens ein Telefonbuch bzw. Kontaktverzeichnis, Kalenderdaten, eine SMS-Nachricht, eine MMS-Nachricht oder eine Notiz.

11. System nach einem der Ansprüche 7 bis 10, wobei es sich bei der Fernsteuerungsfunktion um eine mobile Ortungsfunktion handelt, die in dem Slave-Terminal (101) und in dem Master-Terminal (102) installiert ist.

12. System nach einem der Ansprüche 8 bis 11, wobei die Fernsteuerungseinheit (245) so konfiguriert ist, dass sie die Benutzerdaten an den Master-Terminal (102) übermittelt und danach die Benutzerdaten aus dem Speicher (250) löscht, wenn eine Anforderung zur Übermittlung und zum Löschen der Benutzerdaten erfolgt.

13. System nach einem der Ansprüche 7 bis 12, wobei der Slave-Terminal (101) so konfiguriert ist, dass er ein Verlustereignis erkennt und eine Verlustbenachrichtigungsnachricht an den Master-Terminal (102) übermittelt;
wobei der Slave-Terminal (101) so konfiguriert ist, dass er das Verlustereignis erkennt, indem er bestimmt, ob eine Subscriber Identity Module (SIM) Karte gewechselt worden ist.

## Revendications

1. Procédé de contrôle à distance de données d'utilisateur, le procédé comprenant les étapes consistant à :
régler une fonction de contrôle à distance dans un terminal esclave ;
demander (330, 450), par un terminal maître, les données d'utilisateur, stockées dans le terminal esclave réglé dans une fonction de contrôle à distance, au terminal esclave ;
authentifier (340, 460), par le terminal esclave, le terminal maître ;
extraire (510) les données d'utilisateur demandées à partir d'une mémoire ;
convertir (520) les données d'utilisateur extraites en données d'un format d'enregistrement ;
comparer (530) la taille des données converties à une taille de référence ;
compresser (540), si la taille des données converties est plus grande que la taille de référence, les données converties par un algorithme de compression ;
comparer (550) la taille des données compressées à la taille de référence ;
diviser (560), si la taille des données compressées est plus grande que la taille de référence, les données compressées en la taille de référence ; et
transmettre (360, 480) les données d'utilisateur compressées et divisées au terminal maître si le terminal maître a été authentifié.

2. Procédé selon la revendication 1, dans lequel les données converties sont transmises dans au moins l'un d'un format de message Short Message Service (SMS), d'un format de message Multimedia Messaging Service (MMS) et d'un format de courrier électronique.

3. Procédé selon l'une quelconque des revendications 1 à 2, dans lequel les données d'utilisateur comprennent :
au moins l'un parmi un annuaire téléphonique, des informations de programmation, un message SMS, un message MMS et un mémo.

4. Procédé selon l'une quelconque des revendications 1 à 3, dans lequel le réglage de la fonction de contrôle à distance dans le terminal esclave comprend les étapes consistant à :
stocker les informations concernant le terminal maître et un mot de passe de contrôle à distance dans le terminal esclave ; et
activer la fonction de contrôle à distance.

5. Procédé selon l'une quelconque des revendications 1 à 4, dans lequel la fonction de contrôle à distance est un traceur de mobile.

6. Procédé selon la revendication 1, comprenant en outre les étapes consistant à :
détecter un événement de perte au niveau du terminal esclave (420) ; et
transmettre un message de notification de perte au terminal maître (430),
dans lequel la détection de l'événement de perte (420) comprend l'étape consistant à déterminer si une carte Subscriber Identity Module (SIM) a été modifiée.

7. Système de contrôle à distance de données d'utilisateur, le système comprenant :
un terminal esclave (101), réglé à une fonction de contrôle à distance, pour stocker des données d'utilisateur ; et
un terminal maître (102) pour demander les données d'utilisateur au terminal esclave et les recevoir,
dans lequel le terminal esclave (101) est configuré pour authentifier le terminal maître (102) lorsque le terminal maître (102) lui demande les données d'utilisateur, pour extraire les données d'utilisateur demandées d'une mémoire, pour convertir les données d'utilisateur extraites en données d'un format d'enregistrement, pour comparer la taille des données converties à une taille de référence, pour compresser, si la taille des données converties est plus grande que la taille de référence, les données d'utilisateur demandées par un algorithme de compression, pour comparer la taille des données compressées à la taille de référence, pour diviser, si la taille des données compressées est plus grande que la taille de référence, les données compressées en la taille de référence au cours de l'authentification, et pour transmettre les données d'utilisateur compressées et divisées au terminal maître (102).

8. Système selon la revendication 7, dans lequel le terminal esclave (101) comprend :
une mémoire (250) pour stocker les données d'utilisateur, des informations concernant le terminal maître et un mot de passe de contrôle à distance ;
une unité de contrôle à distance (245) pour extraire les données d'utilisateur demandées lorsque le terminal maître authentifié (102) demande une transmission des données d'utilisateur depuis le terminal esclave (101), dans lequel le terminal maître (102) est authentifié par le mot de passe de contrôle à distance stocké ;
une unité de compression (230) pour compresser les données d'utilisateur par un algorithme de compression si la taille des données d'utilisateur est supérieure à une taille de référence ; et
une unité de communication RF (210) pour transmettre les données d'utilisateur au terminal maître (102),
dans lequel l'unité de contrôle à distance (245) est configurée pour comparer la taille des données compressées à la taille de référence, et diviser les données compressées en la taille de référence, si la taille des données compressées est plus grande que la taille de référence.

9. Système selon la revendication 8, dans lequel l'unité de contrôle à distance (245) est configurée pour convertir les données d'utilisateur extraites en données d'un format d'enregistrement et générer les données dans au moins l'un parmi un format de message Short Message Service (SMS), un format de message Multimedia Messaging Service (MMS) et un format de courrier électronique.

10. Système selon l'une quelconque des revendications 7 à 9, dans lequel les données d'utilisateur comprennent :
au moins l'un parmi un annuaire téléphonique, des informations de programmation, un message SMS, un message MMS et un mémo.

11. Système selon l'une quelconque des revendications 7 à 10, dans lequel la fonction de contrôle à distance est un traceur de mobile qui est installé dans le terminal esclave (101) et le terminal maître (102).

12. Système selon la revendication 8 à 11, dans lequel l'unité de contrôle à distance (245) est configurée pour transmettre les données d'utilisateur au terminal maître (102), puis pour supprimer les données d'utilisateur de la mémoire (250) si une demande est faite pour transmettre et supprimer les données d'utilisateur.

13. Système selon la revendication 7 à 12, dans lequel le terminal esclave (101) est configuré pour détecter un événement de perte et transmettre un message de notification de perte au terminal maître (102),
dans lequel le terminal esclave (101) est configuré pour détecter l'événement de perte en déterminant si une carte Subscriber Identity Module (SIM) a été modifiée.
